# EUROPEAN PATENT APPLICATION

(11) **EP 1 705 767 A1**
(43) Date of publication of application: **27.09.2006**
(21) Application number: 05102383.6
(22) Date of filing: 24.03.2005
(51) Int. Cl.: H02B 13/035

(54) **Combined disconnector-earthing switch device**

(71) Applicant: VA TECH Transmission & Distribution SA, 38000 Grenoble (FR)
(72) Inventor: Leclerc, Frédéric, 38000, Grenoble (FR); Diaferia, Cataldo, 38340, Voreppe (FR)
(74) Representative: Berg, Peter

(57) **Abstract**

A combined disconnector-earthing switch device is shown which comprises, in an enclosure (4) having at least three openings (12, 13, 14) for contacting the switch with a circuit breaker and at least one line, at least
-a first metallic part as a first disconnector terminal (1) held by a first insulator (6),
-a second metallic part as a second disconnector terminal (2) held by a second insulator (7),
-an earthing contact (3),
-a movable contact being electrically connected to the second part (2) and being able to electrically connect either first (1) and second disconnector terminal (2) or earthing contact (3) and second disconnector terminal (2),

whereas the first disconnector terminal (1) has at least two separate contacts (8, 9) on the surface of the disconnector terminal which contacts are oriented towards different openings (12, 13) of the enclosure so that by attaching a connector to one of that contacts an electrical connection to the respective opening is established.

Thus, a combined disconnector-earthing switch device which is suitable for more than one configuration of lines/bushings and circuit breakers is provided.

## Description

The present invention relates to a combined disconnector-earthing switch device.

Patent application WO 01/20736 A1 discloses a gas-insulated switchgear device which comprises in an enclosure a disconnection unit which unit consists of a first fixed contact which is connected to the interruption unit (circuit breaker), an earthing contact and a rotatably moving contact which is electrically connected either to an input terminal or to the earthing contact.

The use of such a disconnector, however, is limited to a certain design and relative orientation of the electric lines and bushings on the one hand and the circuit breaker on the other hand. So for another configuration of electric lines/bushings and circuit breaker another disconnector must be designed.

Thus, one object of the present invention is to provide a combined disconnector-earthing switch device which is suitable for more than one configuration of lines/bushings and circuit breakers.

The object is achieved by a device according to claim 1. Favourable implementations of the invention are presented in claims 2 to 18.

The device according to the invention comprises an enclosure having at least three openings for contacting the switch with a circuit breaker and at least one bushing, and furthermore comprising at least a first disconnector terminal, a second disconnector terminal, an earthing contact and a movable contact being able to electrically connect either first and second disconnector terminal or earthing contact and second disconnector terminal. Due to the fact that the first disconnector terminal has at least two separate contacts on the surface which contacts are oriented towards different openings of the enclosure, an electrical connection from this disconnector terminal to a line can be established either through one opening or through the other opening or a connection to two lines can be established through both openings.

Additional to that it may be advantageous to provide the second disconnector terminal with an oblong connector which is oriented towards one opening of the enclosure and wherein a contact on the surface is oriented towards another opening of the enclosure. Thus it is possible to connect a circuit breaker directly over the second disconnector terminal to an electric line. But of course this connector can also be used for connecting the terminal to another electric line or to any other part of the main circuit of a switchgear station.

If the movable contact is rotatably mounted in the second disconnector terminal and the operating mechanism is insulated by the second insulator within the enclosure, it is possible to insulate both the second disconnector terminal from the enclosure and the operating mechanism of the movable contact from the enclosure and the surrounding contacts with only one insulator.

If the movable contact is bladelike and the first disconnector terminal and the earthing contact each have a recess in order to enclose the contact at least partially, good contact between movable contact and the fixed contacts can be achieved due to the large surface that is in contact whereas the recess also serves as a stopper for the motion of the movable contact.

It can be provided for that the oblong connector covers at least partially the top and the lower surface of the moving contact when the moving contact is neither electrically connected to the first disconnector terminal nor to the earthing contact. Thus the moving contact can be shielded by the oblong connector for dielectrical withstand purpose.

It is advantageous to have an as small as possible rotation angle between connecting position and earthing position of the movable contact because this allows short switching times. On the other hand, there has to be a sufficient insulating distance between the components and between each component and the earthed enclosure. So the rotation angle of the movable contact between the first disconnector terminal and the earthing contact is best chosen to be between 80° and 120°, especially around 110°.

In one possible embodiment of the invention the first and/or second disconnector terminal have the form of a cuboid and the contacts are placed on different sides of the cuboid. Thus the different contact surfaces of the disconnector terminals are automatically oriented towards different directions, e.g. in directions perpendicular to that of the adjacent contact.

If at least one surface of the first and second disconnector terminal with a contact are parallel, it is possible to provide an electric connection perpendicular to the parallel surfaces either from the first or from the second disconnector terminal.

If the relative position of first disconnector terminal and openings of the enclosure is such that one type of connector can either be attached to the first or to the second contact of the first disconnector terminal, then only one type of connector must be manufactured and can be used in two places.

If also the second disconnector terminal has a contact, it is still more advantageous if the relative position of first and second disconnector terminal and openings of the enclosure is such that one type of connector can either be attached to the first or to the second contact of the first disconnector terminal or to the contact of the second dis-connector terminal. Thus one type of connector can be used in three places.

The invention and special embodiments of the invention and their advantages shall be further described by examples according to the figures:
Fig. 1 shows a representation of a combined disconnector-earthing switch device according to the invention.
Fig. 2 shows on the left a schematic representation of a horizontal section of Fig. 1 just above the disconnector terminals and on the right again a schematic representation in perspective view.
Fig. 3 shows on the left a schematic representation of a horizontal section just above the disconnector terminals of another embodiment of the invention, the embodiment having a connection to two electrical lines, and on the right a corresponding schematic representation in perspective view.
Fig. 4 shows on the left a schematic representation of a horizontal section just above the disconnector terminals of another embodiment of the invention, this embodiment also having a connection to two electrical lines, and on the right a corresponding schematic representation in perspective view.
Fig. 5 shows on the left a schematic representation of a horizontal section just above the disconnector terminals of another embodiment of the invention, the embodiment having similar to Fig. 1 and 2 a connection to one electrical line, and on the right a corresponding schematic representation in perspective view.
Fig. 6 to 9 each show a schematic representation of a high voltage switchgear station where at least one of the switch devices according to the Fig. 1 to 5 is implemented.

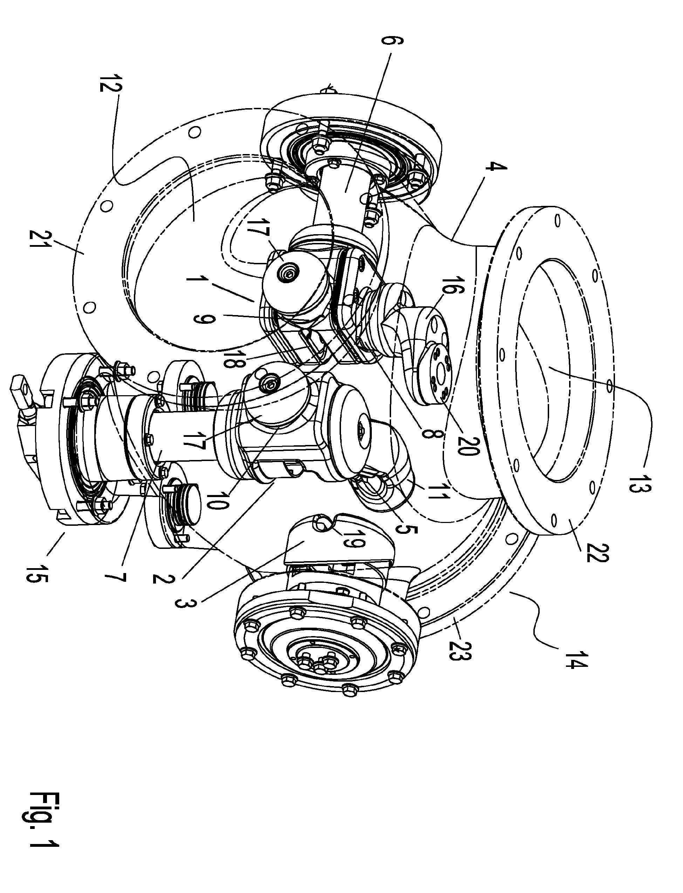

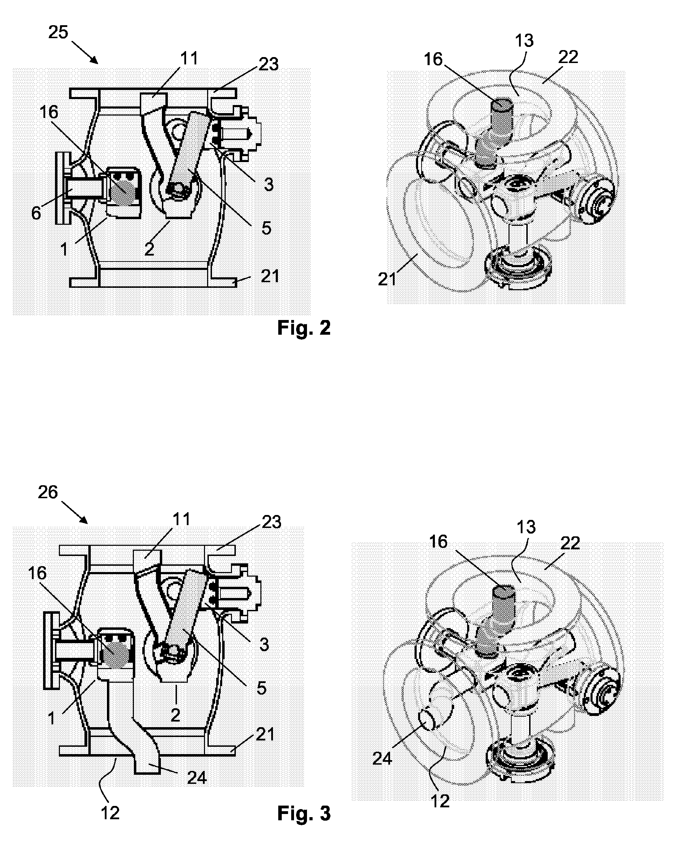

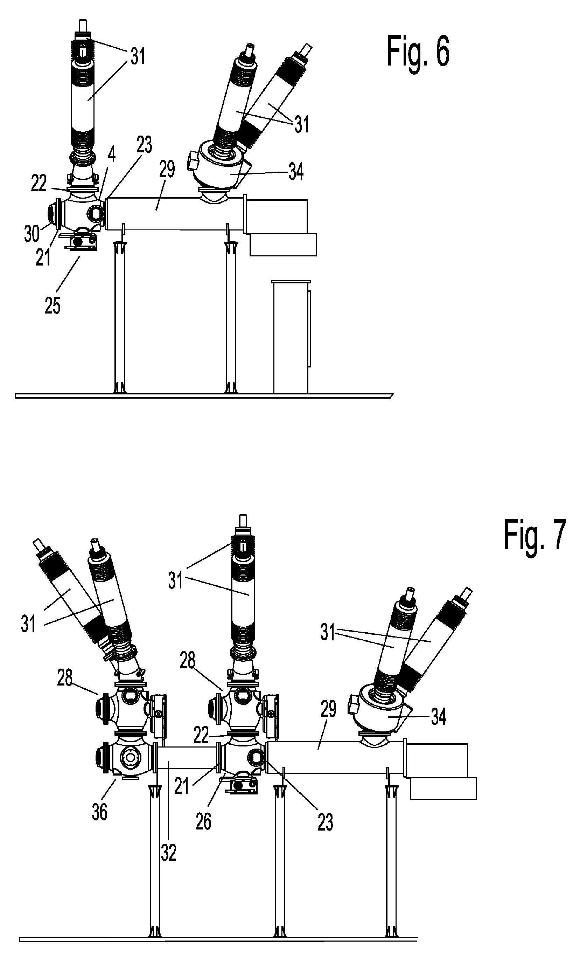

Fig. 6 shows a high voltage switchgear station with a switch according to Fig. 1 and 2.

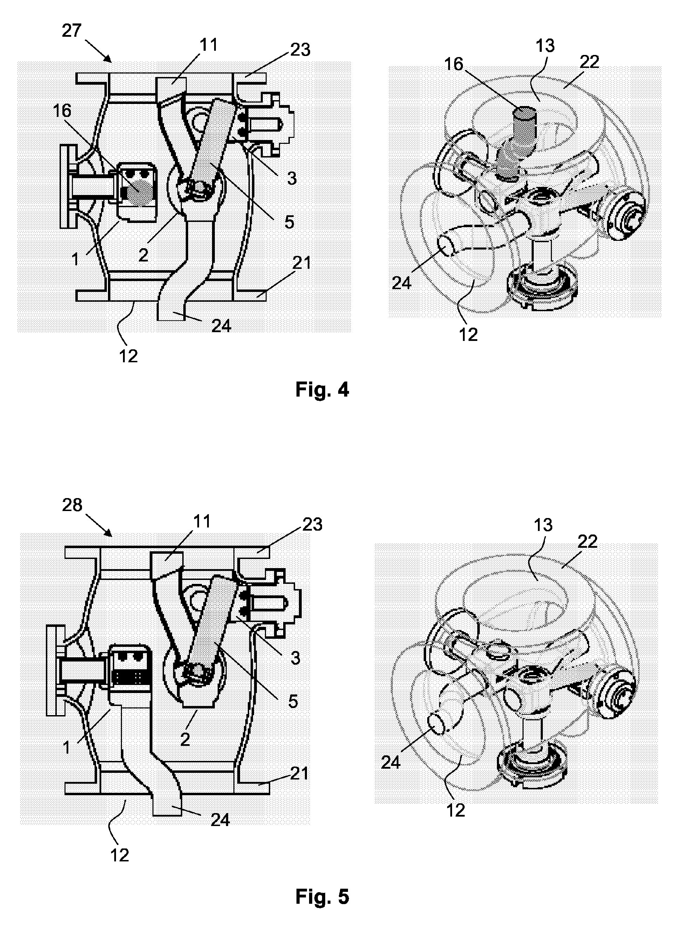

Fig. 7 shows a high voltage switchgear station with a switch according to Fig. 3 and switches according to Fig. 5.

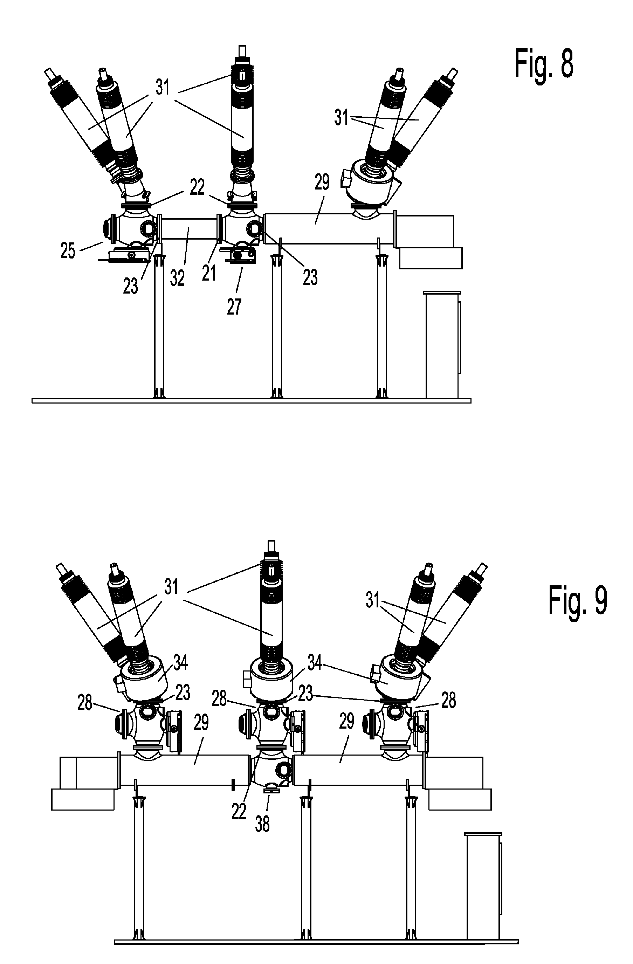

Fig. 8 shows a high voltage switchgear station with a switch according to Fig. 4 and a switch according to Fig. 2.
Fig. 9 shows a high voltage switchgear station with a switch according to Fig. 5.

Fig. 1 shows a combined disconnector-earthing switch device which comprises an enclosure 4 having at least three openings 12, 13, 14 for contacting the switch with a circuit breaker and at least one electric line. Inside the enclosure 4 there is provided a first metallic part which acts as a first disconnector terminal 1 and which is held by a first cylindrical insulator 6 to insulate the terminal from the enclosure. Also provided inside the enclosure 4 and situated in a distance from the first disconnector terminal 1 is a second metallic part acting as a second disconnector terminal 2 which is held by a second cylindrical insulator 7. A third metallic part inside the enclosure 4 is an earthing contact 3 which is electrically connected to the enclosure 4.

The earthing contact 3 can also be insulated against the enclosure 4 and connected to it via e.g. a shunt, which has the advantage that a voltage or current can be injected into the switch device and into the switchgear station for test purposes.

Enclosure 4 and terminals 1, 2 are preferably made of cast alloy of aluminium, insulators 6, 7 are preferably made of cast resin or fibre-reinforced resin, the movable contact 5 is preferably made of copper.

A movable contact 5 is electrically connected to the second disconnector terminal 2 and is rotatably mounted in the second disconnector terminal 2. The movable contact 5 is therefore fixed to an insulating rod passing through the second insulator 7. The operating mechanism 15, which allows to turn the movable contact 5 in a horizontal plane perpendicular to the axis through second insulator 7 and second disconnector terminal 2, is insulated by the second insulator 7 within the enclosure 4.

The metallic parts 1, 2, 3 within the enclosure have such positions that the movable contact 5 is able to electrically connect either first and second disconnector terminal 1, 2 or earthing contact 3 and second disconnector terminal 2 within a range of approximately 110°. The movable contact 5 is bladelike and the first disconnector terminal 1 and the earthing contact 3 each have a recess 18, 19 in order to enclose the contact at least partially. The movable contact 5 connects the first and the second disconnector terminal 1, 2 when the disconnector is in closed position, and it connects the second disconnector terminal 2 and the earthing contact 3 when the earthing switch is in closed position.

In Fig. 1 the moving contact 5 can hardly be seen since it is in the open position between the positions "disconnector closed" and "earthing switch closed".

The first disconnector terminal 1 has the form of a cuboid with rounded edges and six different surfaces and - seen slightly from the right - has a left contact 9 and a top contact 8. Both contacts 8, 9 are flat and even and have a circular shape. The front and the right side of the disconnector terminal 1 have at approximately half height a recess 18 for receiving the bladelike movable contact 5. The backside is used for connection to the insulator 6 and the bottom side has no function. The first disconnector terminal 1 acts as a first connection to an electric line which line is surrounded by a bushing.

The second disconnector terminal 2 is partially cuboid with rounded edges and - seen slightly from the right - has a left contact 10, which is flat and even and has a circular shape. The front, the back and the right side of the disconnector terminal 2 have at approximately half height a recess for allowing the bladelike movable contact 5 to turn. On the right side the disconnector terminal 2 has an elongated part 11 which is oriented perpendicular to the right side and which is used for connecting with a circuit breaker or with any other part of the main circuit of a switchgear station. This connector 11 has basically the form of a curved cylindrical tube which has openings to allow the movable contact 5 to pass through the connector. The connector 11 is oriented towards the opening 14 of the enclosure and the curvature is such that the end of the connector is situated on the central axis of opening 14. The connector 11 acts as a casing for the moving contact 5 when disconnector and earthing switch are in open position and covers at least partially the top and the lower surface of the bladelike contact 5.

The bottom side of the second disconnector terminal 2 is used for connection to the insulator 7 which encloses the operating mechanism 15 of the movable contact 5.

The second disconnector terminal 2 also acts as a second connection to the circuit breaker and as a casing for the movable contact 5 when the disconnector and the earthing switch are in open position.

The left surface of the first disconnector terminal 1 and its contact 9 is parallel to the left surface of the second disconnector terminal 2 and its contact 10 and lies in the same plane.

The earthing contact 3 which is cylindrical and oriented perpendicular to the surface of the enclosure 4 has a recess 19 in its flat surface for enclosing the movable contact 5.

Contacts 9 and 10 are oriented towards the left opening 12 of the enclosure 4 and are parallel to the cross section area of the left opening 12. Contact 8 is oriented towards the top opening 13 of the enclosure 4 and is parallel to the cross section area of the top opening 13.

The axis through first disconnector terminal 1 and first insulator 6 is perpendicular to the axis through second disconnector terminal 2 and second insulator 7. The left contact 9 of the first disconnector terminal 1 and the left contact 10 of the second disconnector terminal 2 are oriented normal to these two axes towards the left opening 12. The connector 11 for connection with a circuit breaker is oriented towards the right opening 14 opposite of the left opening 12. The second (top) contact 8 of the first disconnector terminal 1 is oriented towards the top opening 13 perpendicular to the axis through first disconnector terminal 1 and first insulator 6 but parallel to the axis through second disconnector terminal 2 and second insulator 7.

Openings 12 and 14 are concentric and parallel, top opening 13 is perpendicular to those openings and is situated at the same distance from opening 12 and 14. The openings are terminated by flanges 21, 22 and 23. Flange 21 and/or flange 22 can be connected to another enclosure, e.g. the enclosure of another switch, the enclosure of an electric line leading to another switch or to a bushing insulator of an electric line. Flange 23 can be connected to the enclosure of a circuit breaker or to another enclosure of another part of the main circuit of a switchgear station.

The form of the enclosure 4 is basically like an ellipsoid which has a cylindrical connection piece to each flange 21, 22 and 23. If there is no electrial connection through one of the flanges 21, 22 and 23 this flange is closed gas tight by a suitable cover.

The center of the enclosure 4 is situated between first and second disconnector terminal 1, 2 at approximately half height. So in order to establish a electrical connection from contacts 8, 9, and 10 to the center of the corresponding openings 12, 13 and 14, connectors 16, 24 have to be provided which are fixed to the contacts 8, 9, or 10 with one flat surface so that an other flat surface 20, which is parallel to the other flat surface of the connector 16, 24, lies at the central axis of the respective opening 12, 13 or 14. The connectors 16, 24 are therefore staggered in their longitudinal direction. The connector 16 is the same as connector 24, so that the same connector can be used either in the position of connector 16 or in the positions of connector 24.

Those contacts 9, 10 that are not needed are covered with dielectric shields 17. They have the form of a hemisphere which diameter corresponds to the diameter of the contacts.

Fig. 1 shows a first type of a disconnector-earthing switch device. It is suitable for connecting a single electric line through the opening 14 to a circuit breaker. The connector 16 is attached to the top contact 8 of the first disconnector terminal 1 and this connector leads to the central axis of the opening 13. The left contact 9 of the first disconnector terminal 1 and the left contact 10 of the second disconnector terminal 2 are each covered by a dielectric shield 17.

Fig. 2 shows the same embodiment of the invention as Fig. 1. One can see the movable contact 5 in contact with the earthing contact 3.

Fig. 3 shows another embodiment 26 of the invention for connecting two single lines through two openings 12, 13 to a circuit breaker wherein a connector 16 is attached to the contact 8 (which contact can be seen in Fig. 1) of the first disconnector terminal 1 and a connector 24 is attached to the second contact 9 (which contact can be seen in Fig. 1) of the first disconnector terminal 1. Each connector 16, 24 leads to the central axis of the corresponding opening 13, 12. The contact 10 (which contact can be seen in Fig. 1) of the second disconnector terminal 2 is covered by a dielectric shield 17.

This device 26 is useful for a switchgear station like Fig. 7 - it allows the circuit breaker to be separated from the lines IN and OUT even when switches 28 are in closed position.

Fig. 4 shows another embodiment of the invention for connecting two single lines through two openings 12, 13 to a circuit breaker. This embodiment is similar to the one in Fig. 3. The connector 16 is again attached to the top contact 8 (which contact can be seen in Fig. 1) of the first disconnector terminal 1, but the connector 24 is now attached to the left contact 10 of the second disconnector terminal 2. Each connector leads to central axis of the corresponding opening 12, 13. The left contact 9 of the first disconnector terminal 1 is covered by a dielectric shield 17.

This device 27 is useful for a switchgear station like Fig. 8, which shows a double busbar single line diagram configuration. Fig. 5 shows a similar embodiment as Fig. 1 and 2. It is also suited for connecting a single electrical line to a circuit breaker but in Fig. 5 the single line comes in through the left opening 12. The connector 24 is attached to the left contact 9 of the first disconnector terminal 1 and leads to central axis of the opening 12 and the second contact 8 of the first disconnector terminal 1 and the contact 10 of the second disconnector terminal 2 are each covered by a dielectric shield 17.

The switch devices of this invention are designed for for single-phase enclosed gas-insulated switchgear stations, where each phase is enclosed in a single independant enclosure. But the invention is also applicable for three-phase enclosed gas-insulated switchgear stations, where three phases are enclosed in a common enclosure. The invention is suitable for voltages of 52 kV up to 550 kV. They can advantageously be used in so called hybrid high voltage switchgear stations which consist of partly gas insulated devices (usually the circuit breaker, the earthing switch and the disconnectors) and air insulated devices (usually the busbars).

Fig. 6 shows the side view of a high voltage switchgear station with three single parallel lines and each line with a switch 25 according to Fig. 1 and 2. This is a well known single busbar single line diagram. The bushing 31 on the left is connected to the busbar and the bushing 31 on the right is connected to the overhead line. Between circuit breaker 29 and right bushing 31 a current transformer 34 is provided. The combined disconnector-earthing switch 25 here acts as a busbar disconnector. Enclosure 4 of switch 25 is connected to the enclosure of the circuit breaker 29 via flange 23. Furthermore, enclosure 4 is connected to the left bushing 31 via flange 22. Flange 21 is closed with a cover 30.

Fig. 7 shows a the side view of high voltage switchgear station with three single parallel lines and each line with a switch 26 according to Fig. 3. This Fig. represents a special single line diagram called In-Out-Line. Switch 26 is connected to the enclosure of the circuit breaker 29 via flange 23. Furthermore, it is connected to a switch 28 according to Fig. 5 via flange 22. This switch 28 is connected to the bushing 31 in the middle for the line coming out. Flange 21 of switch 26 is connected to the enclosure 32 of the incoming electric line. This electric line also comes in through a bushing 31 which is connected to a switch 28 according to Fig. 5 which is connected via an enclosure 36, which encloses an L-shaped conductor, to the enclosure 32. Another electric line goes out from circuit breaker 29 through a current transformer 34 and bushing 31. Enclosure 36 is the same as enclosure 4.

Fig. 8 shows the side view of a high voltage switchgear station with three single parallel lines and each line with a switch 27 according to Fig. 4. For each line, bushings 31 on the left and in the middle are connected to a first and a second busbar and bushing 31 on the right is connected to a overhead line. Switches 27 and 25 act as busbar disconnectors, so Fig. 8 represents a double busbar single line diagram. Switch 27 is connected to the enclosure of the circuit breaker 29 via flange 23. Furthermore, it is connected to bushing 31 of the second busbar via flange 22. Flange 21 is connected to the enclosure 32 of the line to the first busbar. This electric line also comes in through a bushing 31 which is connected to a switch 25 (its flange 22) according to Fig. 2. This switch 25 is connected via its flange 23 to the enclosure 32.

Fig. 9 shows the side view of a high voltage switchgear station with three single parallel lines and each line with three switches 28 according to Fig. 5. This Fig. represents a double circuit breaker single line diagram. Each switch 28 is connected via a current transformer 34 to a bushing 31 with the right flange 23, the top flange is closed with a cover. The left and the right switches 28 are connected to a circuit breaker 29 each. The two circuit breakers 29 are connected to an enclosure 38, which encloses a simple T-shaped conductor for connecting the two circuit breakers 29 with switch 28, and the top flange 22 of the enclosure 38 is connected to the left flange 21 of central switch 28. Enclosure 38 is the same as enclosure 4.

The advantage of the switch devices according to the invention is that with only four types of switch devices (Fig. 2 to 5) all common designs of switchgear stations can be put together according to the requirements of a customer. For example, by changing the orientation of the enclosure 4 of switch 28 the earthed connection is either downstream or upstream. So this invention provides a versatile disconnector switch.

As a consequence, the switch devices according to the invention can be used in other switchgear stations than those depicted in the accompanying figures. They can be combined with other elements. For example, cable boxes can be used instead of bushings for only some or all bushings.

It is also a great adavantage with respect to the versatility of elements of switchgear stations to use the same type of enclosure 4, 36, 38 for enclosing the switch devices 25-28 as well as for enclosing electrical connections (such as L-shaped or T-shaped conductors) between elements (such as switch devices, circuit breakers) of a switchgear station.

### Reference numerals:

- 1: first metallic part as a first disconnector terminal
- 2: second metallic part as a second disconnector terminal
- 3: earthing contact
- 4: enclosure
- 5: movable contact
- 6: first insulator
- 7: second insulator
- 8: second (top) contact of first connector
- 9: first (left) contact of first connector
- 10: first (left) contact of second connector
- 11: connector for connection with a circuit breaker
- 12: first (left) opening of the enclosure
- 13: third (top) opening of the enclosure
- 14: second (right) opening of the enclosure
- 15: operating mechanism of the movable contact
- 16: connector to electric line
- 17: dielectric shield
- 18: recess of first disconnector terminal
- 19: recess of earthing contact
- 20: flat surface of the connector 16
- 21: flange of first (left) opening of the enclosure 12
- 22: flange of third (top) opening of the enclosure 13
- 23: flange of second (right) opening of the enclosure 14
- 24: connector to electric line
- 25: Switch device according to Fig. 1 and 2
- 26: Switch device according to Fig. 3
- 27: Switch device according to Fig. 4
- 28: Switch device according to Fig. 5
- 29: Circuit breaker
- 30: Cover for flange
- 31: Bushing
- 32: Enclosure of electric line
- 34: Current transformer
- 36: Enclosure with L-shaped conductor
- 38: Enclosure with T-shaped conductor

## Claims

1. Combined disconnector-earthing switch device, comprising, in an enclosure (4) having at least three openings (12, 13, 14) for contacting the switch with a circuit breaker and at least one line, at least
- a first metallic part as a first disconnector terminal (1) held by a first insulator (6),
- a second metallic part as a second disconnector terminal (2) held by a second insulator (7),
- an earthing contact (3),
- a movable contact (5) being electrically connected to the second part (2) and being able to electrically connect either first (1) and second disconnector terminal (2) or earthing contact (3) and second disconnector terminal (2),
whereas the first disconnector terminal (1) has at least two separate contacts (8, 9) on the surface of the disconnector terminal which contacts are oriented towards different openings (12, 13) of the enclosure so that by attaching a connector to one of that contacts an electrical connection to the respective opening is established.

2. Device according to claim 1 wherein the second disconnector terminal (2) has an oblong connector (11) which is oriented towards one opening (14) of the enclosure and wherein a contact (10) on the surface is oriented towards another opening (12) of the enclosure.

3. Device according to claim 1 or 2 wherein the movable contact (5) is rotatably mounted in the second disconnector terminal (2) and the operating mechanism (15) is insulated by the second insulator (7) within the enclosure (4).

4. Device according to one of claims 1 to 3 wherein the movable contact (5) is bladelike and the first disconnector terminal (1) and the earthing contact (3) each have a recess (18, 19) in order to enclose the contact at least partially.

5. Device according to one of claims 2 to 4 wherein the oblong connector (11) covers at least partially the top and the lower surface of the moving contact (5) when the moving contact (5) is neither electrically connected to the first (1) disconnector terminal nor to the earthing contact (3).

6. Device according to one of claims 3 to 5 wherein the rotation angle of the movable contact (5) between contact with the first disconnector terminal (1) and the earthing contact (3) is between 80° and 120°, especially around 110°.

7. Device according to one of claims 1 to 6 wherein the first and/or second disconnector terminal (1, 2) have the form of a cuboid and the contacts are placed on different sides of the cuboid.

8. Device according to one of claims 1 to 7 wherein at least one surface of the first and second disconnector terminal (1, 2) with a contact are parallel.

9. Device according to one of claims 1 to 8 wherein the relative position of first (1) disconnector terminal and openings (12, 13) of the enclosure is such that one type of connector (16, 24) can either be attached to the first (9) or to the second (8) contact of the first disconnector terminal (1).

10. Device according to one of claims 2 to 9 wherein the relative position of first (1) and second (2) disconnector terminal and openings (12, 13) of the enclosure is such that one type of connector (16, 24) can either be attached to the first (9) or to the second (8) contact of the first disconnector terminal (1) or to the contact (10) of the second disconnector terminal (2).

11. Device according to one of claims 1 to 10 wherein the axis through first disconnector terminal (1) and first insulator (6) is perpendicular to the axis through second disconnector terminal (2) and second insulator (7) and wherein a first contact (9) of the first disconnector terminal (1) and a first contact (10) of the second disconnector terminal (2) are oriented normal to these two axes towards a first opening (12) and wherein the connector (11) for connection with a circuit breaker is oriented towards a second opening (14) opposite of the first opening (12) and wherein the second contact (8) of the first disconnector terminal (1) is oriented towards a third opening (13) perpendicular to the axis through first disconnector terminal (1) and first insulator (6) but parallel to the axis through second disconnector terminal (2) and second insulator (7).

12. Device according to claim 10 for connecting a single electric line through an opening (13) to a circuit breaker wherein a connector (16) is attached to the second contact (8) of the first disconnector terminal (1) and this connector leads to the central axis of the opening (13) and the first contact (9) of the first disconnector terminal (1) and the contact (10) of the second disconnector terminal (2) are each covered by a dielectric shield (17).]

13. Device according to claim 10 for connecting two single electric lines through two openings (12, 13) to a circuit breaker wherein a connector (16, 24) is attached to each the first (9) and second contact (8) of the first disconnector terminal (1) and each connector leads to the central axis of an opening (12, 13) and the contact (10) of the second disconnector terminal (2) is covered by a dielectric shield (17).

14. Device according to claim 10 for connecting two single electric lines through two openings (12, 13) to a circuit breaker wherein a connector (16) is attached to each the second contact (8) of the first disconnector terminal (1) and the contact (10) of the second disconnector terminal (2) and each connector leads to central axis of an opening (12, 13) and the first contact (9) of the first disconnector terminal (1) is covered by a dielectric shield (17).

15. Device according to claim 10 for connecting a single electric line through an opening (12) to a circuit breaker wherein a connector (24) is attached to the first contact (9) of the first disconnector terminal (1) and this connector leads to central axis of an opening (12) and the second contact (8) of the first disconnector terminal (1) and the contact (10) of the second disconnector terminal (2) are each covered by a dielectric shield (17).

16. Device according to one of claims 1 to 15 with at least two connectors (16, 24) wherein all connectors (16, 24) attached to the first (1) and/or to the second (2) disconnector terminal are equal.

17. High voltage switchgear station comprising at least one combined disconnector-earthing switch device (25-28) according to one of claims 1 to 16.

18. High voltage switchgear station according to claim 17 wherein at least one electric conductor which connects elements of the switchgear station is enclosed by an enclosure (36, 38) of the same type as the enclosure (4) of a disconnector-earthing switch device (25-28) according to one of claims 1 to 16.
